# EUROPÄISCHE PATENTSCHRIFT

(11) **EP 2 776 267 B1**
(45) Veröffentlichungstag und Bekanntmachung des Hinweises auf die Patenterteilung: **26.10.2016**
(21) Anmeldenummer: 12790474.6
(22) Anmeldetag: 09.11.2012
(51) Int. Cl.: B60K 37/06, G06F 3/01, G05G 1/08, G05G 5/03, G05G 9/047, H01H 25/00, H01H 25/04, H01H 5/02, H01H 3/50

(54) **FAHRZEUG-STEUERUNGSVORRICHTUNG**
VEHICLE CONTROL DEVICE
DISPOSITIF DE COMMANDE DE VÉHICULE

(30) Priorität: 11.11.2011 DE 102011055302; 01.03.2012 DE 102012101698
(43) Veröffentlichungstag der Anmeldung: 17.09.2014
(73) Patentinhaber: GRAMMER AG, 92224 Amberg (DE)
(72) Erfinder: VLOEMANS, Eric, B-2250 Olen (BE); DECKERS, Goedele, B-8800 Roeselare (BE)
(74) Vertreter: Hannke, Christian
(86) Internationale Anmeldenummer: PCT/EP2012/072212
(87) Internationale Veröffentlichungsnummer: WO 2013/068514

(56) Entgegenhaltungen:
- EP-A1- 1 615 250
- WO-A1-2005/050846

## Beschreibung

Die Erfindung betrifft eine Fahrzeug-Steuerungsvorrichtung zum handbetätigten Steuern von Fahrzeugeinrichtungen mit mindestens einem Gehäuse und einem innenseitig angeordneten schwenkbaren Bauteil gemäß dem Oberbegriff des Patentanspruches 1.

Steuerungsvorrichtungen zum handbetätigten Steuern von Fahrzeugeinrichtungen sind hinreichend bekannt. Derartige Steuerungsvorrichtungen werden häufig im Mittelkonsolenbereich bei Pkws angeordnet, um beispielsweise das Navigationssystem oder das Radio zu bedienen. Herkömmlicherweise weisen derartige Steuerungsvorrichtungen eine Vielzahl von Knöpfen auf, die betätigt werden können, um die gewünschte Funktion, die zu steuern ist, herbeizuführen.

Derartige Steuerungsvorrichtungen können auch einen zentral angeordneten Knopf aufweisen, der sich sowohl nach links als auch nach rechts sowie nach vorne und nach hinten schwenken lässt und ebenso drehbar um eine sich im Wesentlichen vertikal verlaufende Achse ausgebildet ist. Die im Wesentlichen vertikal verlaufende Achse würde von der Schwenkbewegung ebenso leicht geschwenkt werden. Durch eine derartige Schwenkbewegung und/oder eine Drehbewegung des Knopfes können unterschiedliche Funktionen, die zu steuern sind, beispielsweise auf einem Display des Fahrzeuges aufgerufen werden und entsprechend bedient werden.

Derartige Steuerungsvorrichtungen mit einem drehbaren und/oder schwenkbaren Knopf bzw. Drehknopf sind unterhalb des Drehknopfes herkömmlicherweise mit einer Mechanik ausgestattet, die sich üblicherweise aus einem oder mehreren zahnradähnlichen Elementen und einer oder mehreren damit zusammenwirkenden Federn, auch Blattfedern, zusammensetzen. Wird nun zum Beispiel ein Drehknopf, der mit einem derartigen Zahnrad, dessen Zähne gerundete Außenflächen aufweisen, gedreht, so findet jeweils ein Auslenken der Blattfeder, die gegen die Außenfläche des Rades wirkt, bei jedem Zahn statt. Dies hat zur Folge, dass ein Ratschen bzw. ein Klick-Geräusch entsteht, wobei bei jeder Ratsch- und Klickgeräuschbewegung durch Auslenkung der Blattfeder an jedem Zahn des Zahnrades ein geringer Widerstand während der Drehbewegung erfolgt. Dieser Widerstand entsteht aufgrund der Reibung zwischen der Blattfeder und dem Zahnrad und hat eine Abnutzung des Zahnrades und der Blattfeder zur Folge.

Ebenso sind Steuerungsvorrichtungen bekannt, deren Drehknopf bei einer Schwenkbewegung einen optischen Kontakt auf der jeweiligen Seite, zu der die Schwenkbewegung hingeführt wird, bewirkt und hierdurch ein schaltungsfreies Loch geschlossen wird, das wiederum zu einer Steuerung einer Bedieneinrichtung und somit zum Bedienen einer bestimmten Funktion innerhalb der Bedieneinrichtung führt. Derartige optische Kontaktelemente sind nachteilhaft relativ komplex aufgebaut und erfordern eine kostenintensive Herstellung.

Bei einer Schwenkbewegung derartiger Drehknöpfe ist es bisher notwendig, mechanische Einrichtungen zur Verfügung zu stellen, die ein Schwenken in die gewünschte Schwenkposition und ein selbstständiges Zurückbewegen des Drehknopfes aus der momentanen Schwenkposition heraus in eine Ausgangsstellung - beispielsweise mittels einer Federbeaufschlagung - sicherstellen. Dies hat zur Folge, dass derartige mechanische Einrichtungen bei einer häufigen Benutzung des zu schwenkenden Drehknopfes Abnutzungserscheinungen aufweisen und somit im Laufe der Zeit in ihrer Funktionsweise unzuverlässig werden.

Eine handbetätigte Fahrzeug-Steuerungsvorrichtung mit den Merkmalen des Oberbegriffs des Anspruchs 1 ist aus der EP 1 615 250 A1 bekannt.

Demzufolge ist es Aufgabe der Erfindung, eine Fahrzeug-Steuerungsvorrichtung zum handbetätigten Steuern von Fahrzeugeinrichtungen zur Verfügung zu stellen, die reibungsfrei und abnutzungsfrei funktioniert und kostengünstig hergestellt werden kann.

Diese Aufgabe wird gemäß den Merkmalen des Patentanspruches 1 gelöst.

Kerngedanke der Erfindung ist es, dass bei einer Fahrzeug-Steuerungsvorrichtung zum handbetätigten Steuern von Fahrzeugeinrichtungen mit einem Gehäuse, mindestens einem Drehknopf, der an einem ersten Ende einer Drehachse angebracht ist, deren zweites Ende mit mindestens einem ersten schwenkbaren Bauteil verbunden ist und mindestens einer ersten Schwenkachse, die sich senkrecht zu der Längsausdehnungsrichtung der Drehachse (8) erstreckt und um welche das erste schwenkbare Bauteil innerhalb des Gehäuses schwenkbar ist, an dem ersten schwenkbaren Bauteil mindestens ein erstes Magnetelement anzuordnen, dessen magnetische Kraft bei einer Schwenkbewegung des ersten schwenkbaren Bauteiles mit mindestens einem zweiten Magnetelement, welches mit dem Gehäuse ortsfest verbunden ist, zumindest zeitweise wechselwirkt. Durch eine derartig aufgebaute Fahrzeug-Steuerungsvorrichtung ist es vorteilhaft möglich, dass eine reibungsfreie und abnutzungsfreie Schwenkbewegung ohne großen Herstellungskostenaufwand realisiert wird. Bekanntlich weisen auf einer magnetischen Kraft basierende Abläufe keine mechanischen Abnutzungserscheinungen in ihren mechanischen Einrichtungen auf, da eine derartige auf Magnetkraft basierende Bewegung berührungsfrei erfolgen kann.

Das erste Magnetelement ist an einem ersten auf- und abwärts schwenkbaren Ende des schwenkbaren Bauteiles und ein weiteres erstes Magnetelement ist an einem zweiten auf-und abwärts schwenkbaren Ende des schwenkbaren Bauteiles angeordnet, wobei zwischen dem ersten und dem zweiten Ende die erste Schwenkachse angeordnet ist. Hierbei erweist es sich als vorteilhaft, wenn das schwenkbare Bauteil senkrecht oder nahezu senkrecht zu der Längsausdehnungsrichtung der Drehachse verlaufend eine Ebene aufweist, wie es beispielsweise mittels eines plattenförmigen Elementes mit gegebenenfalls zusätzlichen Rändern und weiteren Aufbauten gegeben sein kann. Dabei ist das erste Magnetelement an dem ersten schwenkbaren Bauteil lose angeordnet.

Vorteilhaft und gemäß einer bevorzugten Ausführungsform ist das zweite Magnetelement zumindest teilweise unterhalb eines Randbereiches des ersten Endes und ein weiteres zweites Magnetelement zumindest teilweise unterhalb eines Randbereiches des zweiten Endes ortsfest im Gehäuse angeordnet und jeweils eines der ersten Magnetelemente ist oberhalb von jedem zweiten Magnetelement jeweils mit einem in dem Randbereich angeordneten ersten Halteelement verbunden. Auf diese Weise kann ein Kippen des schwenkbaren Bauteiles dazu führen, dass ein randseitig angeordnetes erstes Magnetelement mit dem darunterliegenden zweiten Magnetelement in Kontakt gelangt und somit eine anziehende Wirkung erfährt. Wenn hingegen die Schwenkbewegung in die entgegengesetzte Richtung durchgeführt wird, wird das erste Magnetelement wieder von dem zweiten Magnetelement gelöst. Bei der entgegengesetzten Schwenkbewegung kann dann eine Kontaktierung zwischen dem ersten und zweiten Magnetelement auf der anderen Seite, also in dem Randbereich des anderen Endes, erfolgen.

Vorteilhaft kann bei einer derartigen Schwenkbewegung, wenn das eine Ende momentan abwärts geschwenkt ist, also der Drehknopf zu einer Richtung hin ausgelenkt worden ist, dem Randbereich dieses Endes zugehörige erste Magnetelement auf dem darunter angeordneten zweiten Magnetelement abgelegt werden, so dass eine maximale Anziehungskraft der beiden Magnete zueinander wirkt. Dieses Ablegen des ersten Magnetelementes auf dem zweiten Magnetelement ist jedoch auch durch eine entsprechende Verschiebung des ersten Magnetelementes innerhalb des Halteelementes bei einer Neutralstellung des Drehknopfes und damit bei einer Neutralstellung des schwenkbaren Bauteiles möglich. In diesem Fall sind beide erste Magnetelemente auf den zugehörigen zweiten Magnetelementen abgelegt, welches sicherstellt, dass eine neutrale Stellung, also eine ungeschwenkte Stellung des Drehknopfes und des schwenkbaren Bauteiles, wieder von alleine eingenommen wird, nachdem zuvor eine Schwenkbewegung erzeugt worden ist. Dies wird dadurch sichergestellt, dass beide erste Magnetelemente anziehend auf die ihnen zugeordneten darunterliegenden zweiten Magnetelemente wirken und somit ein Gleichgewicht des wippenartig aufgebauten schwenkbaren Bauteiles vorliegt. Zugleich wird hierdurch erreicht, dass, wenn das schwenkbare Bauteil und somit der Drehknopf erneut geschwenkt werden, das sich erste Magnetelement in dem Randbereich des Endes, welches nach oben geschwenkt wird, von dem darunterliegenden zweiten Magnetelement gegen einen magnetischen Anziehungswiderstand löst und somit eine Art Klickgefühl für den Bediener des Drehknopfes erzeugt wird. Dies geschieht aufgrund des ruckartigen Lösens des ersten Magnetelementes von dem zweiten Magnetelement. Voraussetzung für eine derartige Funktionsweise ist, dass die ersten Magnetelemente lose vorliegen, also innerhalb des Halteelementes beispielsweise verschiebbar angeordnet sind.

Eine zweite Schwenkachse, die sich senkrecht zu der Längsausdehnungsrichtung der Drehachse und der ersten Schwenkachse erstreckt und um welche ein zweites schwenkbares Bauteil auf dem ersten Bauteil schwenkbar ist, ist gemäß einer Ausführungsform der Erfindung zusätzlich angeordnet. Dies ermöglicht, dass der Drehknopf nicht nur in zwei Richtungen, also - in Fahrzeuglängsrichtung betrachtet - in Vorwärts- und in Rückwärtsrichtung, sondern auch nach links und rechts geschwenkt werden kann. Im Wesentlichen ist die zweite Schwenkachse zusammen mit dem zweiten schwenkbaren Bauteil ähnlich zu der ersten Schwenkachse mit dem ersten schwenkbaren Bauteil aufgebaut, wobei die zu dem ersten schwenkbaren Bauteil zugehörigen ortsfesten zweiten Magnetelemente nun als weitere Magnetelemente ortsfest auf dem ersten schwenkbaren Bauteil und nicht auf dem Gehäuse oder in dem Gehäuse ortsfest angeordnet sind.

Für das zweite schwenkbare Bauteil mit der dazugehörigen zweiten Schwenkachse ist an dem zweiten schwenkbaren Bauteil mindestens ein drittes Magnetelement angeordnet, dessen magnetische Kraft bei einer Schwenkbewegung des zweiten schwenkbaren Bauteiles mit mindestens einem vierten Magnetelement, welches mit dem ersten Bauteil ortsfest verbunden ist, zumindest zeitweise wechselwirkt.

In Zusammenhang mit der zweiten Schwenkachse und dem zweiten schwenkbaren Bauteil ist das dritte Magnetelement an einem ersten auf- und abwärts schwenkbaren Ende des zweiten schwenkbaren Bauteiles und ein weiteres drittes Magnetelement an einem zweiten auf- und abwärts schwenkbaren Ende des zweiten schwenkbaren Bauteiles angeordnet, wobei zwischen dem ersten und zweiten Ende die zweite Schwenkachse angeordnet ist.

In Zusammenhang mit dem zweiten schwenkbaren Bauteil ist das vierte Magnetelement zumindest teilweise unterhalb eines Randbereiches des ersten Endes des zweiten schwenkbaren Bauteiles und ein weiteres viertes Magnetelement zumindest teilweise unterhalb eines Randbereiches des zweiten Endes des zweiten schwenkbaren Bauteiles ortsfest an dem ersten schwenkbaren Bauteil angeordnet und jeweils eines der dritten Magnetelemente oberhalb von jedem vierten Magnetelement jeweils mit einem in dem Randbereich angeordneten dritten Halteelement vorhanden.

Auch im Falle des zweiten schwenkbaren Bauteiles ist ein jeweiliges Magnetelement, nämlich das dritte Magnetelement bei einem abwärts geschwenkten Ende und auch in der Neutralstellung des zweiten schwenkbaren Bauteiles auf einem darunter angeordneten weiteren Magnetelement, nämlich einem der vierten Magnetelemente, ablegbar.

Das erste und das zweite schwenkbare Bauteil sind gemäß einer bevorzugten Ausführungsform in dem Randbereichen der Enden mit Lichtschrankeneinrichtungen versehen, die bei einer aufwärts gerichteten Schwenkbewegung des jeweiligen Endes unterbrechbar sind, woraufhin ein Signal an eine Auswerte- und Analyseeinrichtung sendbar ist, um dieses Unterbrechungssignal als eine stattgefundene Schwenkbewegung zu deuten und somit eine Funktion innerhalb einer der Fahrzeugeinrichtungen, wie beispielsweise eines Navigationssystems, eines Radios, eines Computers oder dergleichen, zu aktivieren und/oder zu deaktivieren und/oder zu verändern.

Weitere vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen. Hierbei zeigen:
- Fig. 1: in einer perspektivischen Darstellung die erfindungsgemäße Fahrzeug-Steuerungsvorrichtung in Außendarstellung gemäß einer Ausführungsform der Erfindung;
- Fig. 2: die erfindungsgemäße Fahrzeug-Steuerungsvorrichtung in einer perspektivischen Darstellung mit abgenommenem Deckel gemäß der Ausführungsform der Erfindung;
- Fig. 3: in einer perspektivischen Darstellung die erfindungsgemäße Fahrzeug-Steuerungsvorrichtung mit abgenommenem Deckel und in einem aufgeschnittenen Zustand;
- Fig. 4: eine Ausschnittdarstellung der in Fig. 3 wiedergegebenen Fahrzeug-Steuerungsvorrichtung in einer Draufsicht und in einem ungeschwenkten Zustand;
- Fig. 5a: in einer perspektivischen und aufgeschnittenen Darstellung ohne Deckel die erfindungsgemäße Fahrzeug-Steuerungsvorrichtung in einem ersten Schwenkzustand, wobei zusätzlich in einer Ausschnittsdarstellung eine seitliche Darstellung der geschwenkten Teile wiedergegeben wird;
- Fig. 5b: in einer weiteren perspektivischen und aufgeschnittenen Darstellung ohne Deckel die erfindungsgemäße Fahrzeug-Steuerungsvorrichtung mit dazugehöriger seitlicher Darstellung in einer ersten Schwenkbewegung, wie sie in Fig. 5a gezeigt wird, jedoch in einer anderen Schnittdarstellung;
- Fig. 5c: die in Fig. 5b wiedergegebene Fahrzeug-Steuerungsvorrichtung in einer Neutralstellung, also ohne Schwenkbewegung;
- Fig. 5d: die in Fig. 5b und 5c wiedergegebene Fahrzeug-Steuerungsvorrichtung in einer zweiten entgegengesetzten Schwenkbewegung;
- Fig. 6a, 6b: in einer schematischen Darstellung und in einer realen Darstellung die Grundfunktion der Fahrzeug-Steuerungsvorrichtung bei einer neutralen Stellung;
- Fig. 7a, 7b: in einer schematischen Darstellung und in einer realen Darstellung die Grundfunktion der Fahrzeug-Steuerungsvorrichtung in einer ersten Schwenkbewegung;
- Fig. 8a, 8b: in einer schematischen Darstellung und in einer realen Darstellung die Grundfunktion der Fahrzeug-Steuerungsvorrichtung in einer zweiten Schwenkbewegung;
- Fig. 9: in einer perspektivischen Darstellung die erfindungsgemäße Fahrzeug-Steuerungsvorrichtung mit abgenommenem Deckel mit eingezeichneten Lichtschranken;
- Fig. 9a: in einer seitlichen Ausschnittdarstellung die Fahrzeug-Steuerungsvorrichtung mit eingezeichneten Lichtschranken in einer neutralen Stellung; und
- Fig. 9b: in einer seitlichen Ausschnittdarstellung die erfindungsgemäße Fahrzeug-Steuerungsvorrichtung bei einer ersten Schwenkbewegung.

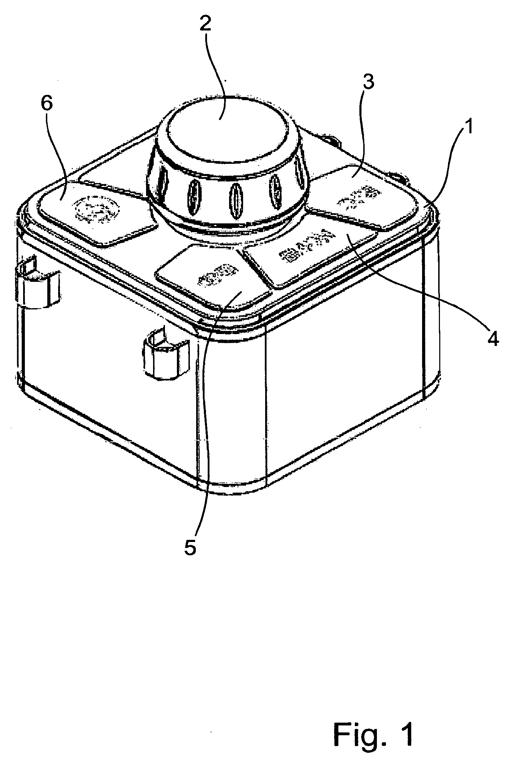

In Fig. 1 ist in einer perspektivischen Außendarstellung die erfindungsgemäße Fahrzeug-Steuerungsvorrichtung gemäß einer Ausführungsform der Erfindung wiedergegeben. Diese Steuerungsvorrichtung weist ein Gehäuse 1 zusammen mit einem oberseitig angeordneten Drehknopf 2 und verschiedenen weiteren Betätigungsknöpfen 3, 4, 5 und 6 auf, die für die Betätigung zusätzlicher Fahrzeugeinrichtungen und/oder Funktionen innerhalb des Fahrzeuges vorgesehen sind. Derartige Steuerungsvorrichtungen können beispielsweise im Mittelkonsolenbereich eines Nutzfahrzeuges oder eines Pkws eingebaut sein. Alternativ können derartige Steuerungsvorrichtungen auch in einer Armlehne eines Traktors oder eines anderen Nutzfahrzeuges integriert sein.

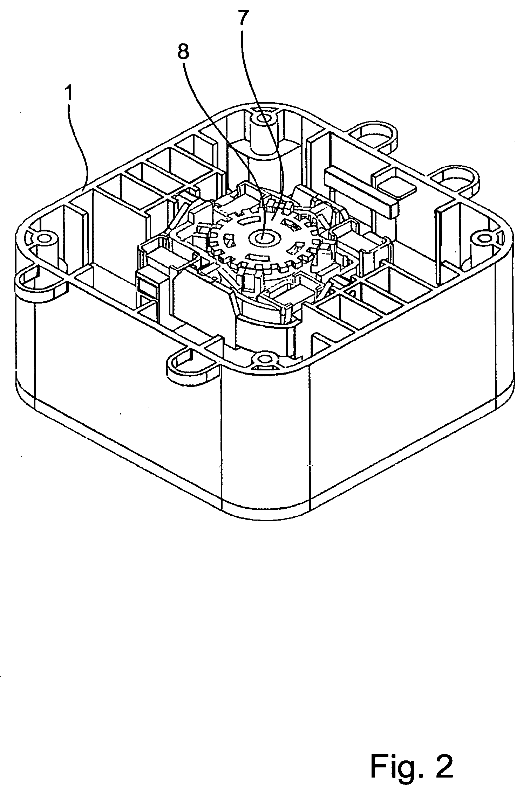

In Fig. 2 ist in einer perspektivischen offenen Darstellung die erfindungsgemäße FahrzeugSteuerungsvorrichtung mit Teilen des Gehäuses 1 wiedergegeben. Dieser Darstellung ist zu entnehmen, dass in einem unteren Teil des Gehäuses 1 bei abgenommenem Deckel und ohne Drehknopf 2 ein Zahnrad 7 derart gelagert ist, dass es über eine gemeinsame Drehachse 8 mit dem Drehknopf verbunden ist und bei Durchführung einer Drehbewegung des Drehknopfes 2 ebenso eine Drehung erfährt.

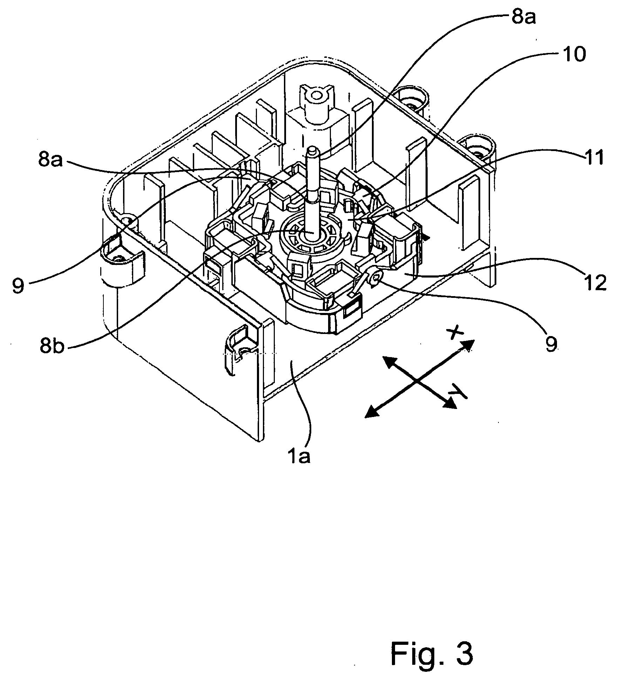

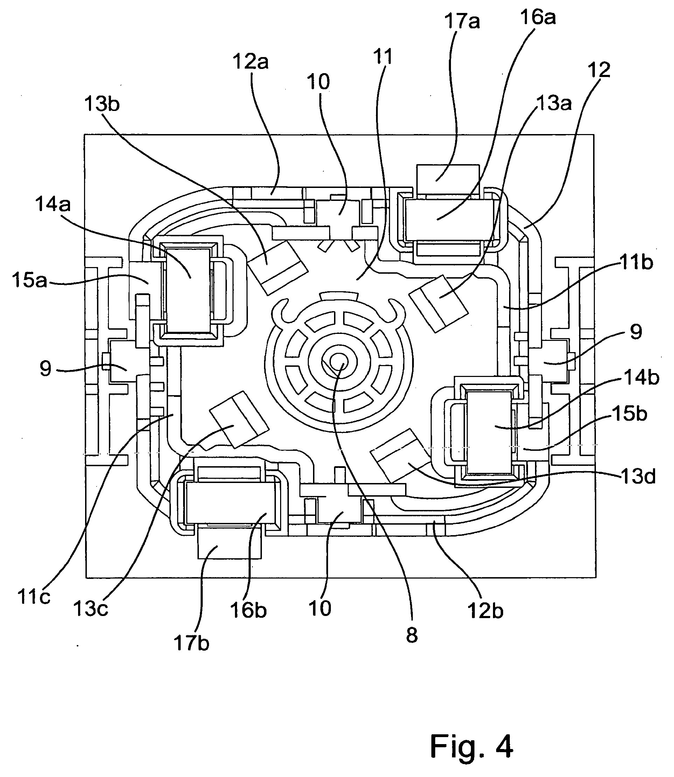

Dieses Zahnrad 7 kann in Abhängigkeit von der Drehstellung des Drehknopfes 2 in verschiedenen Drehstellungen vorhanden sein. Um das Zahnrad 7 herum sind insgesamt vier Magnetelemente, wie sie in Fig. 4 mit dem Bezugszeichen 13a, 13b, 13c und 13 wiedergegeben sind, angeordnet, die mit ihrer magnetischen Kraft bzw. magnetischen Wirkung mit den Zähnen des Zahnrades 7 und abwechselnd dazu mit den jeweils zwischen zwei benachbarten Zähnen liegenden Zahnlücken wechselwirken. Die vier Magnetelemente 13a, 13b, 13c und 13d sind vorzugsweise im gleichen Abstand voneinander beabstandet auf einer Kreisbahn um das Zahnrad 7 herum angeordnet, also jeweils mit einem Viertelkreis voneinander beabstandet. Das Zahnrad 7 besteht vorzugsweise aus einem magnetischen Material, wie einem Metall. Das Zahnrad kann mit Hilfe der Drehachse 8, die wiederum über den Drehknopf betätigt wird, gedreht werden. Sowohl die Drehachse als auch das Zahnrad 7 und die Magnetelemente 13a-13d sind innerhalb eines schwenkbaren Bauteiles 11, wie es in Fig. 3 wiedergegeben ist, angeordnet.

In Fig. 3 ist in einer perspektivischen Darstellung erfindungsgemäß die Fahrzeug-Steuerungsvorrichtung in einem aufgeschnittenen Zustand und ohne Deckel wiedergegeben, wobei schwenkbare Bauteile in einem ungeschwenkten Zustand vorliegen. Ein erstes Ende 8a der Drehachse ist mit einem hier nicht näher dargestellten Drehknopf 2 verbunden. Das zweite unten liegende Ende 8b des Drehachse 8 ist mit einem ersten schwenkbaren Bauteil 12, welches um eine Schwenkachse 9 geschwenkt werden kann und einem zweiten schwenkbaren Bauteil 11, welches um eine zweite Schwenkachse 10 geschwenkt werden kann, verbunden, wobei das untere Ende 8b direkt mit dem zweiten schwenkbaren Bauteil 11 verbunden ist und mit dem ersten schwenkbaren Bauteil 12 über die zweite Schwenkachse 10 indirekt verbunden ist.

Die erste Schwenkachse 9 lagert das erste schwenkbare Bauteil 12, welches beispielsweise plattenförmig ausgebildet sein kann und seitlich hochgezogene Ränder aufweist und gegebenenfalls weitere geformte Anteile zeigt, das gegenüber an einem Boden 1a des Gehäuses schwenkbar gelagert. Die erste Schwenkachse 9 ist parallel zu dem Boden 1 a des Gehäuses 1 an dem Gehäuse angeordnet und ist vorzugsweise senkrecht zu der ungeschwenkten Drehachse 8 ausgerichtet.

Die zweite Schwenkachse 10 ist an ihren Endbereichen an dem ersten schwenkbaren Bauteil 12 aufgehängt und lagert das zweite schwenkbare Bauteil 11 schwenkbar gegenüber dem ersten schwenkbaren Bauteil 12. Somit ist eine - bezogen auf die Darstellung gemäß Fig. 4 - nach links und rechts orientierte Schwenkbewegung der Drehachse 8 durch das zweite schwenkbare Bauteil 11 mit dazugehöriger zweiter Schwenkachse 10 und eine nach oben und nach unten gerichtete Schwenkbewegung - bezogen auf die Bildebene gemäß Fig. 4 - des ersten schwenkbaren Bauteiles 12 mit dazugehöriger erster Schwenkachse 9 möglich.

Auf dem ersten schwenkbaren Bauteil 12 ist in einem Randbereich eines ersten Endes 12a ein erstes Magnetelement 16a angeordnet. Ebenso ist ein weiteres erstes Magnetelement 16b in einem Randbereich eines zweiten Endes 12b des ersten schwenkbaren Bauteiles 12 angeordnet.

Zusätzlich sind zweite Magnetelemente 17a und 17b zumindest teilweise unterhalb dieser ersten Magnetelemente 16a und 16b ortsfest an dem Boden 1 a des Gehäuses 1 vorhanden.

Ebenso sind dritte Magnetelemente 14a und 14b in Randbereichen eines ersten Endes 11a und eines zweiten Endes 11 b des zweiten schwenkbaren Bauteiles 11 auf dem zweiten schwenkbaren Bauteil 11 vorhanden. Diesen dritten Magnetelementen 14a und 14b sind zumindest teilweise darunterliegende vierte Magnetelemente 15a und 15b zugeordnet, wobei diese vierten Magnetelemente auf dem ersten schwenkbaren Bauteil 12 ortsfest angeordnet sind.

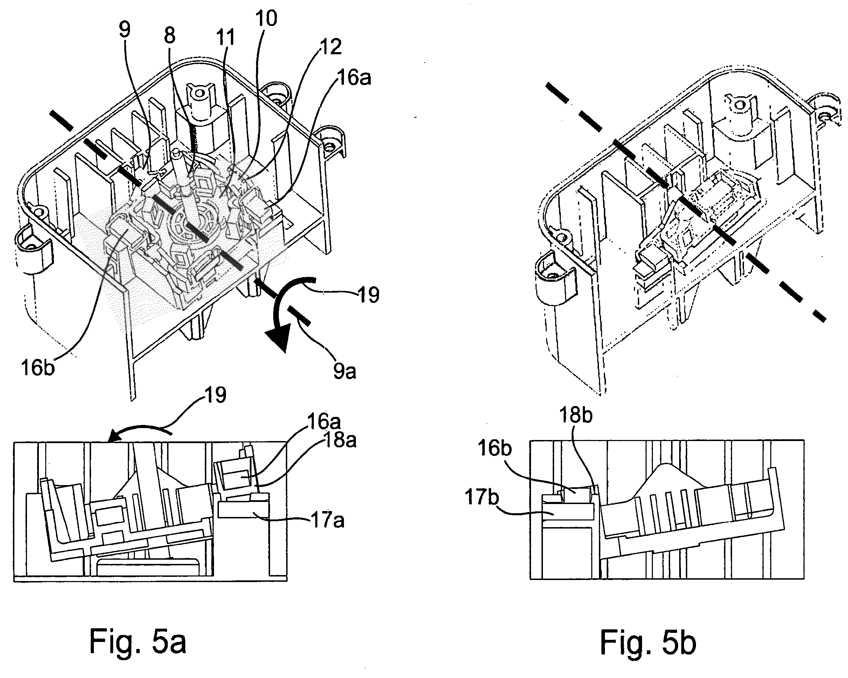

Sowohl die ersten Magnetelemente 16a und 16b als auch die dritten Magnetelemente 14a und 14b sind im Gegensatz zu den zweiten und vierten Magnetelementen lose angeordnet, d.h. sie können höhenverschiebbar oder höhenverstellbar ausgebildet sein, wie es aus den nachfolgenden Figuren 5a-5d sowie 6b, 7b und 8b hervorgeht.

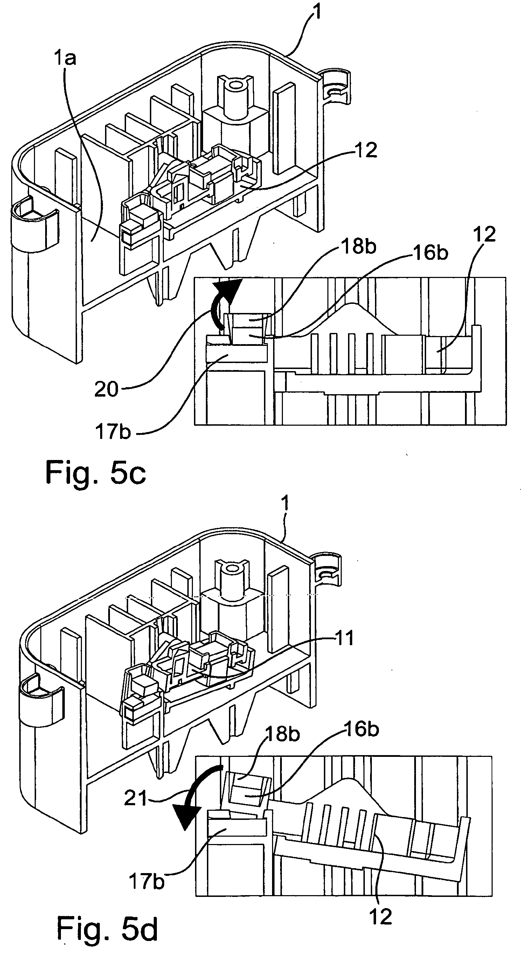

In Fig. 5a, 5b, 5c und 5d ist in verschiedenen perspektivischen Querschnittsdarstellungen die erfindungsgemäße Fahrzeug-Steuerungsvorrichtung mit verschiedenen Schwenkstellungen des ersten schwenkbaren Bauteiles 12 dargestellt. In Fig. 5a wird in einer aufgeschnittenen Darstellung die Steuerungsvorrichtung in einer ersten Schwenkstellung, die auch in Fig. 5b wiedergegeben wird, gezeigt. Dieser Darstellung ist deutlich zu entnehmen, dass gemäß dem Pfeil 19 eine Schwenkung, initiiert durch einen Bediener, der den hier nicht näher dargestellten Drehknopf schwenkt, nach links um die erste Schwenkachse 9, die hier nochmals als schematische Achse 9a eingezeichnet ist, stattfindet. Hierdurch wird sowohl das erste schwenkbare Bauteil 12 als auch das zweite schwenkbare Bauteil 11 nach links geschwenkt, wie es auch aus der in Fig. 5a angegebenen ausschnittsweisen Querschnittdarstellung zu entnehmen ist. Aus einer Querschnittdarstellung, die in Fig. 5a unten gemäß einem Schnitt im Bereich des ersten Magnetelementes 16a dargestellt ist, wird das erste Magnetelement 16a von dem zweiten Magnetelement 17a durch die Schwenkbewegung, die sich nach links richtet, gelöst, indem ein erstes Halteelement 18a das erste Magnetelement 16a nach oben hebt.

Zugleich wird, wie in Fig. 5b unten dargestellt, welches eine Querschnittdarstellung entlang des ersten Magnetelementes 16b wiedergibt, das erste Magnetelement 16b auf dem zweiten Magnetelement 17b abgelegt. Dies wird durch das weitere Halteelement 18b ermöglicht, welches das erste Magnetelement 16b bei einer entgegengesetzten Schwenkbewegung wieder von dem zweiten Magnetelement 17b abhebt. Somit ist das erste Magnetelement 16b ebenso wie das erste Magnetelement 16a auf diese Weise lose angeordnet, wohingegen die zweiten Magnetelemente 17a und 17b ortsfest an dem Boden 1 a des Gehäuses 1 positioniert sind.

In Fig. 5c ist in zwei Querschnittdarstellungen eine Neutralposition des schwenkbaren ersten Bauteiles 12, also ohne Schwenkbewegung, dargestellt. In dem Gehäuse 1 ist bezüglich des Bodens 1 a das an der ersten Schwenkachse 9 wippenartig aufgehängte schwenkbare Bauteil 12 parallel bzw. horizontal ausgerichtet, so dass die hier nicht näher dargestellte Drehachse 8 in vertikaler Richtung sich nach oben erstreckt, ohne in einer Winkelstellung vorzuliegen.

In dieser Neutralstellung werden von beiden Halteelementen 18a und 18b die ersten Magnetelemente 16a und 16b auf den zweiten Magnetelementen 17a und 17b abgelegt, wodurch eine stabile Lage in einer Neutralstellung vorliegt. Diese besteht aufgrund der anziehenden Kräfte zwischen den ersten Magnetelementen 16a, 16b und den zweiten Magnetelementen 17a, 17b und wird gegen eine anziehende magnetische Kraft bei einer erneuten Schwenkbewegung, wie sie in entgegengesetzter Richtung durch den Pfeil 20 angezeigt wird, wieder gelöst. Dies hat eine Art Klick-Gefühl zur Folge, wenn sich das erste Magnetelement 16b ruckartig von dem zweiten Magnetelement 17b löst, um - wie in Fig. 5d dargestellt - nach rechts zusammen mit dem ersten schwenkbaren Bauteil 12 geschwenkt zu werden. Das Halteelement 18b greift somit bei einer Schwenkbewegung, die nach rechts gerichtet ist, das erste Magnetelement 16b auf und löst es von dem zweiten Magnetelement 17b.

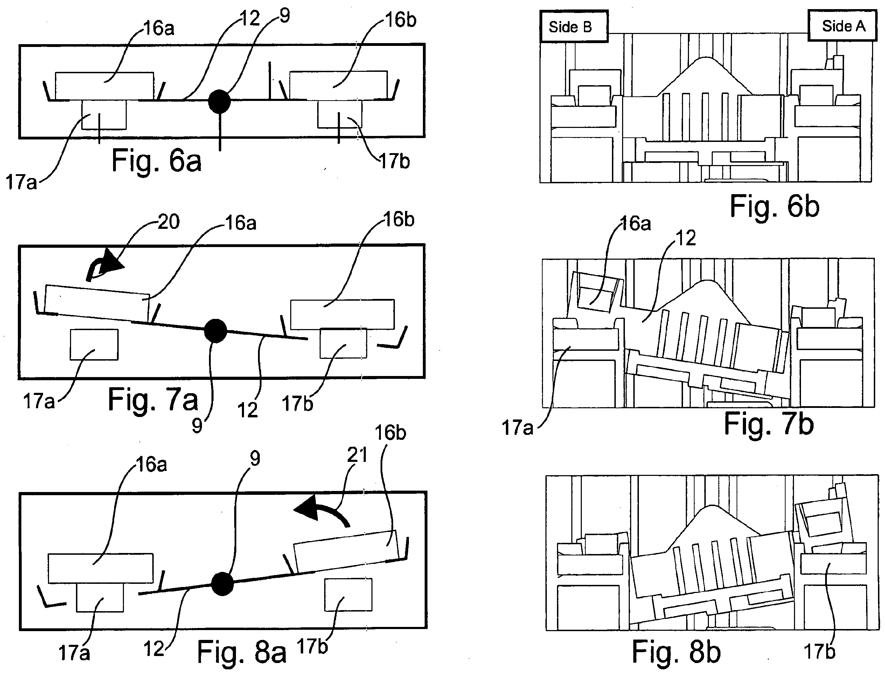

In Fig. 6a, 6b, 7a, 7b, 8a und 8b ist nochmals das Grundprinzip der auf magnetischer Anziehungswirkung basierenden Funktion der erfindungsgemäßen Fahrzeug-Steuerungsvorrichtung dargestellt. Diesen Darstellungen gemäß Fig. 6a, 7a und 8a ist in einer schematischen Weise zu entnehmen, wie sich in einer Neutralposition, einer ersten nach rechts gerichteten Schwenkbewegung und in einer zweiten nach links gerichteten Schwenkbewegung die Magnetelemente verhalten. Ebenso ist dies in den Figuren 6b, 7b und 8b wiedergegeben, wobei die darin gezeigten Querschnittsdarstellungen einen stufenartigen Querschnitt wiederspiegeln, der zur Folge hat, dass sowohl das erste Magnetelement auf der einen Seite als auch das erste Magnetelement auf der anderen Seite gleichzeitig betrachtet werden können, auch wenn diese beiden ersten Magnetelemente in Realität in zwei verschiedenen Ebenen liegen.

In Fig. 6a und 6b ist eine Neutralstellung des schwenkbaren Bauteiles, wie beispielsweise des ersten schwenkbaren Bauteiles, wiedergegeben. Dieser Darstellung ist zu entnehmen, dass in dieser Neutralstellung die ersten Magnetelemente 16a und 16b auf den zweiten Magnetelementen 17a und 17b abgelegt sind. Somit wirkt die maximal mögliche magnetische Kraft zwischen den ersten und zweiten Magnetelementen, womit eine automatische Rückkehr des schwenkbaren Bauteiles 12 in seine Neutralstellung nach erfolgter Schwenkbewegung sichergestellt ist. Dies geht ebenso aus Fig. 6b hervor.

In Fig. 7a und 7b ist gemäß dem Pfeil 20 eine Schwenkbewegung nach rechts um die Schwenkachse 9 erfolgt. Das schwenkbare Bauteil 12 bewirkt somit, dass das erste Magnetelement 16a von dem zweiten Magnetelement 17a abgehoben wird, wie es beispielsweise durch ein Untergreifen des ersten Magnetelementes 16a mit Vorsprüngen bzw. Greifarmen des ersten Bauteiles möglich ist. Zeitgleich bleibt das erste Magnetelement 16b auf dem zweiten Magnetelement 17b abgelegt, wobei die dazugehörigen Greifarme bzw. Vorsprünge nach unten bewegt werden.

In Fig. 8a und 8b ist eine weitere Schwenkbewegung gemäß Pfeil 21 nach links gerichtet dargestellt. In dieser Position ist nun das erste Magnetelement 16a auf dem zweiten Magnetelement 17a abgelegt. Zugleich ist das erste Magnetelement 16b durch die Greifarme bzw. \/orsprünge des ersten schwenkbaren Bauteiles 12 von dem zweiten Magnetelement 17b abgehoben.

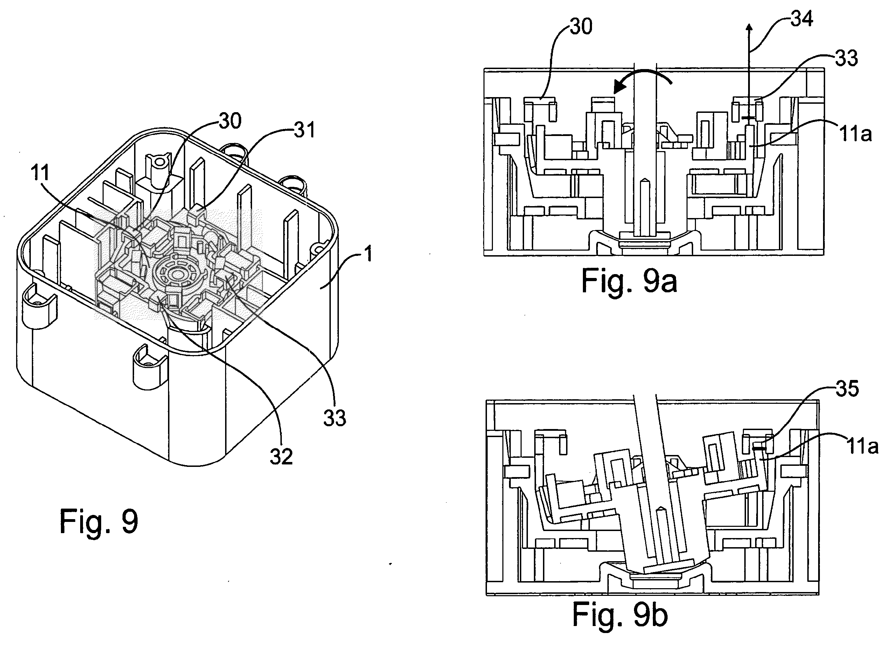

In Fig. 9 ist in einer perspektivischen Darstellung die Fahrzeug-Steuerungsvorrichtung ohne Deckel wiedergegeben, in der insgesamt 4 Lichtschranken 30, 31, 32 und 33 an dem Randbereich des zweiten schwenkbaren Bauteiles 11 angeordnet gezeigt sind. Diese Lichtschranken haben die Aufgabe, dass ein Signal an eine Auswerte- und Analyseeinrichtung abgegeben wird, sobald eine Schwenkbewegung, in diesem Fall des zweiten schwenkbaren Bauteiles, in die jeweilige Richtung erfolgt ist. Wie aus Fig. 9 in Verbindung mit Fig. 9a und 9b, die Querschnittdarstellungen in Ausschnitten wiedergeben, ersichtlich ist, wird ein Lichtstrahl 34 innerhalb einer Lichtschranke 33 durch einen Randbereich 11a des schwenkbaren Bauteiles 11 unterbrochen, sobald eine Schwenkbewegung nach links stattfindet. Hierdurch kann mittels des dadurch abgegebenen Signales festgestellt werden, in welche Richtung die Schwenkbewegung erfolgt ist.

In der Darstellung gemäß Fig. 9a ist eine neutrale Position ohne Schwenkbewegung wiedergegeben. In der Darstellung gemäß Fig. 9b ist eine geschwenkte Position des schwenkbaren Bauteiles 11 dargestellt. Dieser Darstellung ist deutlich zu entnehmen, dass in dem innenraum 35 der Lichtschranke 33 der Lichtstrahl 34 durch den Randbereich 11a unterbrochen worden ist und hierdurch ein Signal an die hier nicht näher dargestellte Auswerte- und Analyseeinrichtung weitergegeben werden kann.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Gehäuse
- 1a: Boden
- 2: Drehknopf
- 3: Betätigungsknopf
- 4: Betätigungsknopf
- 5: Betätigungsknopf
- 6: Betätigungsknopf
- 7: Zahnrad
- 8: Drehachse
- 8a: erstes Ende
- 8b: zweites Ende
- 9: Schwenkachse
- 10: Schwenkachse
- 11: schwenkbares Bauteil
- 11a: erstes Ende/Randbereich/Gehäuse
- 11b: zweites Ende
- 12: schwenkbares Bauteil
- 12a: erstes Ende
- 12b: zweites Ende
- 13a: Magnetelement
- 13b: Magnetelement
- 13c: Magnetelement
- 13d: Magnetelement
- 14a: Magnetelement
- 14b: Magnetelement
- 15a: Magnetelement
- 15b: Magnetelement
- 16a: Magnetelement
- 16b: Magnetelement
- 17a: Magnetelement
- 17b: Magnetelement
- 18a: Halteelement
- 18b: Halteelement
- 19: Pfeil
- 20: Pfeil
- 30: Lichtschranke
- 31: Lichtschranke
- 32: Lichtschranke
- 33: Lichtschranke
- 34: Lichtstrahl
- 35: Innenraum

## Patentansprüche

1. Fahrzeug-Steuerungsvorrichtung zum handbetätigten Steuern von Fahrzeugeinrichtungen mit
einem Gehäuse (11a),
mindestens einem Drehknopf (2), der an einem ersten Ende (8a) einer Drehachse (8) angebracht ist, deren zweites Ende (8b) mit mindestens einem ersten schwenkbaren Bauteil (12) verbunden ist, und
mit mindestens einer ersten Schwenkachse (9), die sich senkrecht zu der Längsausdehnungsrichtung der Drehachse (8) erstreckt und um welche das erste schwenkbare Bauteil (12) innerhalb des Gehäuses (1) schwenkbar ist,
wobei mindestens ein erstes Magnetelement (16a, 16b) angeordnet ist, dessen magnetische Kraft bei einer Schwenkbewegung des ersten schwenkbaren Bauteiles (12) mit mindestens einem zweiten Magnetelement (17a, 17b), welches mit dem Gehäuse (1) ortsfest verbunden ist, zumindest teilweise wechselwirkt,
**dadurch gekennzeichnet, dass**
das mindestens eine erste Magnetelement (16a, 16b) an dem ersten schwenkbaren Bauteil (12) lose angeordnet ist.

2. Fahrzeug-Steuerungsvorrichtung nach Anspruch 1,
**dadurch gekennzeichnet, dass**
das erste Magnetelement (16a) an einem ersten auf- und abwärts schwenkbaren Ende (12a) des ersten schwenkbaren Bauteiles (12) und ein weiteres erstes Magnetelement (16b) an einem zweiten auf- und abwärts schwenkbaren Ende (12b) des ersten schwenkbaren Bauteiles (12) angeordnet ist, wobei zwischen dem ersten und dem zweiten Ende (12a, 12b) die erste Schwenkachse (9) angeordnet ist.

3. Fahrzeug-Steuerungsvorrichtung nach Anspruch 2,
**dadurch gekennzeichnet, dass**
das zweite Magnetelement (17a) zumindest teilweise unterhalb eines Randbereiches des ersten Endes (12a) und ein weiteres zweites Magnetelement (17b) zumindest teilweise unterhalb eines Randbereiches des zweiten Endes (16b) ortsfest im Gehäuse (1) angeordnet ist und jeweils eines der ersten Magnetelemente (16a, 16b) oberhalb jedes zweiten Magnetelementes (17a, 17b) jeweils mit einem in dem Randbereich angeordneten ersten Halteelement (18a, 18b) angeordnet ist.

4. Fahrzeug-Steuerungsvorrichtung nach Anspruch 3,
**dadurch gekennzeichnet, dass**
bei einem abwärts geschwenkten Ende (12a, 12b) das jeweilige erste Magnetelement (16a, 16b) auf dem darunter angeordneten zweiten Magnetelement (17a, 17b) ablegbar ist.

5. Fahrzeug-Steuerungsvorrichtung nach einem der vorangegangenen Ansprüche, **gekennzeichnet durch**
eine zweite Schwenkachse (10), die sich senkrecht zu der Längsausdehnungsrichtung der Drehachse (8) und der ersten Schwenkachse (9) erstreckt und um welche ein zweites schwenkbares Bauteil (11) auf dem ersten Bauteil (12) schwenkbar ist.

6. Fahrzeug-Steuerungsvorrichtung nach Anspruch 5,
**dadurch gekennzeichnet, dass**
an dem zweiten schwenkbaren Bauteil (11) mindestens ein drittes Magnetelement (14a, 14b) angeordnet ist, dessen magnetische Kraft bei einer Schwenkbewegung des zweiten schwenkbaren Bauteiles (11) mit mindestens einem vierten Magnetelement (15a, 15b), welches mit dem ersten Bauteil (12) ortsfest verbunden ist, zumindest zeitweise wechselwirkt.

7. Fahrzeug-Steuerungsvorrichtung nach Anspruch 6,
**dadurch gekennzeichnet, dass**
das dritte Magnetelement (14a) an einem ersten auf- und abwärts schwenkbaren Ende (11a) des zweiten schwenkbaren Bauteiles (11) und ein weiteres drittes Magnetelement (14b) an einem zweiten auf- und abwärts schwenkbaren Ende (11b) des zweiten schwenkbaren Bauteiles (11) angeordnet ist, wobei zwischen dem ersten und zweiten Ende (11a, 11b) die zweite Schwenkachse (10) angeordnet ist.

8. Fahrzeug-Steuerungsvorrichtung nach Anspruch 7,
**dadurch gekennzeichnet, dass**
das vierte Magnetelement (15a) zumindest teilweise unterhalb eines Randbereiches des ersten Endes (11a) und ein weiteres viertes Magnetelement (15b) zumindest teilweise unterhalb eines Randbereiches des zweiten Endes (11 b) ortsfest an dem ersten schwenkbaren Bauteil (12) angeordnet ist und jeweils eines der dritten Magnetelemente (14a, 14b) oberhalb von einem der vierten Magnetelemente (15a, 15b) mit einem in dem Randbereich angeordneten zweiten Halteelement angeordnet ist.

9. Fahrzeug-Steuerungsvorrichtung nach Anspruch 8,
**dadurch gekennzeichnet, dass**
bei einem abwärts geschwenkten Ende (11a, 11b) das jeweilige dritte Magnetelement (14a, 14b) auf dem darunter angeordneten vierten Magnetelement (15a, 15b) ablegbar ist.

10. Fahrzeug-Steuerungsvorrichtung nach einem der vorangegangenen Ansprüche,
**dadurch gekennzeichnet, dass**
das erste und das zweite schwenkbare Bauteil (11, 12) in den Randbereichen der Enden (11a, 11b; 12a, 12b) Lichtschrankeneinrichtungen (30-33) aufweisen, die bei einer aufwärts gerichteten Schwenkbewegung des jeweiligen Endes (11a) unterbrechbar sind, woraufhin ein Signal an eine Auswerte- und Analyseeinrichtung sendbar ist.

## Claims

1. Vehicle control device for the manually actuated control of vehicle devices, comprising a housing (11 a), at least one rotary knob (2), which is attached to a first end (8a) of a rotary axis (8), the second end (8b) of which is connected to at least one first pivotable component (12), and at least one first pivot axis (9), which extends perpendicularly to the longitudinal extension direction of the rotary axis (8) and about which the first pivotable component (12) can be pivoted within the housing (1), at least one first magnet element (16a, 16b) being arranged, the magnetic force of which interacts at least in part with at least one second magnet element (17a, 17b), which is connected to the housing (1) in a stationary manner, when the first pivotable component (12) is pivoted, **characterised in that** the at least one first magnet element (16a, 16b) is loosely arranged on the first pivotable component (12).

2. Vehicle control device according to claim 1, **characterised in that** the first magnet element (16a) is arranged on a first upwardly and downwardly pivotable end (12a) of the first pivotable component (12) and a further first magnet element (16b) is arranged on a second upwardly and downwardly pivotable end (12b) of the first pivotable component (12), the first pivot axis (9) being arranged between the first and the second end (12a, 12b).

3. Vehicle control device according to claim 2, **characterised in that** the second magnet element (17a) is arranged in the housing (1) in a at least in part beneath an edge region of the first end (12a) and a further second magnet element (17b) is arranged in the housing in a stationary manner at least in part beneath an edge region of the second end (16b), and each one of the first magnet elements (16a, 16b) is arranged above each second magnet element (17a, 17b) in each case by means of a first holding element (18a, 18b) arranged in the edge region.

4. Vehicle control device according to claim 3, **characterised in that** each first magnet element (16a, 16b) can be placed on the second magnet element (17a, 17b) arranged therebeneath when an end (12a, 12b) is pivoted downwards.

5. Vehicle control device according to any of the preceding claims, **characterised by** a second pivot axis (10) which extends perpendicularly to the longitudinal extension direction of the rotational axis (8) and of the first pivot axis (9) and about which a second pivotable component (11) can be pivoted on the first component (12).

6. Vehicle control device according to claim 5, **characterised in that** at least one third magnet element (14a, 14b) is arranged on the second pivotable component (11), the magnetic force of which element interacts at least intermittently with at least one fourth magnet element (15a, 15b), which is connected to the first component (12) in a stationary manner, when the second pivotable component (11) is pivoted.

7. Vehicle control device according to claim 6, **characterised in that** the third magnet element (14a) is arranged on a first upwardly and downwardly pivotable end (11 a) of the second pivotable component (11) and a further third magnet element (14b) is arranged on a second upwardly and downwardly pivotable end (11 b) of the second pivotable component (11), the second pivot axis (10) being arranged between the first and second end (11a, 11b).

8. Vehicle control device according to claim 7, **characterised in that** the fourth magnet element (15a) is arranged on the first pivotable component (12) in at least in part beneath an edge region of the first end (11 a) and a further fourth magnet element (15b) is arranged on the first pivotable component in a stationary manner at least in part beneath an edge region of the second end (11 b), and each one of the third magnet elements (14a, 14b) is arranged above one of the fourth magnet elements (15a, 15b) in each case by means of a second holding element arranged in the edge region.

9. Vehicle control device according to claim 8, **characterised in that** each third magnet element (14a, 14b) can be placed on the fourth magnet element (15a, 15b) arranged therebeneath when an end (11 a, 11 b) is pivoted downwards.

10. Vehicle control device according to any of the preceding claims, **characterised in that** the first and the second pivotable components (11, 12) have photoelectric sensor devices (30-33) in the edge regions of the ends (11 a, 11 b; 12a, 12b) which can be interrupted when the relevant end (11 a) is pivoted upwards, whereupon a signal can be sent to an evaluation and analysis device.

## Revendications

1. Dispositif de commande de véhicule pour la commande manuelle de dispositifs de véhicule avec
un boîtier (11 a),
au moins un bouton rotatif (2), qui est monté à une première extrémité (8a) d'un axe de rotation (8), dont la deuxième extrémité (8b) est reliée à au moins un premier composant pivotant (12) et
avec au moins un premier axe de pivotement (9) qui s'étend perpendiculairement à la direction de dilatation longitudinale de l'axe de rotation (8) et autour duquel le premier composant pivotant (12) peut pivoter à l'intérieur du boîtier (1),
au moins un premier élément magnétique (16a, 16b) étant disposé, dont la force magnétique interagit au moins partiellement, lors d'un mouvement de pivotement du premier composant pivotant (12), avec au moins un deuxième élément magnétique (17a, 17b) qui est relié de manière stationnaire avec le boîtier (1),
**caractérisé en ce que**
l'au moins un premier élément magnétique (16a, 16b) est disposé de manière lâche sur le premier composant pivotant (12).

2. Dispositif de commande de véhicule selon la revendication 1,
**caractérisé en ce que**
le premier élément magnétique (16a) est disposé sur une première extrémité (12a), pivotant vers le haut et vers le bas, du premier composant pivotant (12) et un autre premier élément magnétique (16b) est disposé sur une deuxième extrémité (12b), pivotant vers le haut et vers le bas, du premier composant pivotant (12) le premier axe de pivotement (9) étant disposé entre la première et la deuxième extrémité (12a, 12b).

3. Dispositif de commande de véhicule selon la revendication 2,
**caractérisé en ce que**
le deuxième élément magnétique (17a) est disposé au moins partiellement en dessous d'une zone de bord de la première extrémité (12a) et un autre deuxième élément magnétique (17b) est disposé au moins partiellement en dessous d'une zone de bord de la deuxième extrémité (16b) de manière stationnaire dans le boîtier (1) et chacun des premiers éléments magnétiques (16a, 16b) est disposé au-dessus de chaque deuxième élément magnétique (17a, 17b) chacun avec un premier élément de maintien (18a, 18b) disposé dans la zone de bord.

4. Dispositif de commande de véhicule selon la revendication 3,
**caractérisé en ce que**
sur une extrémité pivotée vers le bas (12a, 12b), le premier élément magnétique (16a, 16b) peut être posé sur le deuxième élément magnétique (17a, 17b) disposé en dessous.

5. Dispositif de commande de véhicule selon l'une des revendications précédentes,
**caractérisé par**
un deuxième axe de pivotement (10) qui s'étend perpendiculairement à la direction de dilatation longitudinale de l'axe de rotation (8) et au premier axe de pivotement (9) et autour duquel un deuxième composant pivotant (11) peut pivoter sur le premier composant (12).

6. Dispositif de commande de véhicule selon la revendication 5,
**caractérisé en ce que**
sur le deuxième composant pivotant (11) se trouve au moins un troisième élément magnétique (14a, 14b) dont la force magnétique interagit au moins temporairement, lors d'un mouvement de pivotement du deuxième composant pivotant (11), avec au moins un quatrième élément magnétique (15a, 15b) qui est relié de manière stationnaire avec le premier composant (12).

7. Dispositif de commande de véhicule selon la revendication 6,
**caractérisé en ce que**
le troisième élément magnétique (14a) est disposé sur une première extrémité (11a), pivotant vers le haut et vers le bas, du deuxième composant pivotant (11) et un autre troisième élément magnétique (14b) est disposé sur une deuxième extrémité (11b), pivotant vers le haut et vers le bas, du deuxième composant pivotant (11), le deuxième axe de pivotement (10) étant disposé entre la première et la deuxième extrémités (11a, 11 b).

8. Dispositif de commande de véhicule selon la revendication 7,
**caractérisé en ce que**
le quatrième élément magnétique (15a) est disposé au moins partiellement en dessous d'une zone de bord de la première extrémité (11a) et un autre quatrième élément magnétique (15b) est disposé au moins partiellement en dessous d'une zone de bord de la deuxième extrémité (11b) de manière stationnaire sur le premier composant pivotant (12) et un des troisièmes éléments magnétiques (14a, 14b) est disposé au-dessus d'un des quatrièmes éléments magnétiques (15a, 15b) avec un deuxième élément de maintien disposé dans la zone de bord.

9. Dispositif de commande de véhicule selon la revendication 8,
**caractérisé en ce que**
sur une extrémité (11a, 11 b) pivotée vers le bas, le troisième élément magnétique (14a, 14b) peut être posé sur le quatrième élément magnétique (15a, 15b) disposé en dessous.

10. Dispositif de commande de véhicule selon l'une des revendications précédentes,
**caractérisé en ce que**
le premier et le deuxième composants pivotants (11, 12) présentent, dans les zones de bords des extrémités (11a, 11 b ; 12a, 12b) des dispositifs à barrières photo-électriques (30-33) qui peuvent être interrompus lors d'un mouvement de pivotement vers le haut de l'extrémité (11a) correspondante, ce qui permet d'envoyer un signal à un dispositif d'analyse et d'évaluation.
